# EUROPÄISCHE PATENTANMELDUNG

(11) **EP 4 497 868 A1**
(43) Veröffentlichungstag der Anmeldung: **29.01.2025**
(21) Anmeldenummer: 24189063.1
(22) Anmeldetag: 17.07.2024
(51) Int. Cl.: D21C 5/02, D21H 11/14

(54) **STOFFLICHE WIEDERVERWERTUNG SILIKONISIERTER PAPIERE**

(30) Priorität: 27.07.2023 EP 23188062
(71) Anmelder: Evonik Operations GmbH, 45128 Essen (DE)
(72) Erfinder: Knott, Wilfried, 45355 Essen (DE); Dudzik, Horst, 45326 Essen (DE)
(74) Vertreter: Evonik Patent Association

(57) **Zusammenfassung**

Beschrieben wird ein Verfahren zur stofflichen Wiederverwertung silikonisierter Papiere, umfassend zumindest die folgenden Schritte; erster Schritt (a): Behandlung mindestens eines silikonisierten Papiers unter Kontaktierung mit mindestens einem Alkohol und mindestens einem Alkalimetallalkoholat unter Wärmeeintrag, und zwar ohne Entfernung von etwaig auftretendem Wasser aus der Reaktionsmischung, und danach, zweiter Schritt (b): Abtrennen des aus dem ersten Schritt (a) resultierenden, mindestens einen de-silikonisierten Papiers aus der gegebenenfalls zuvor neutralisierten Reaktionsmischung.

## Beschreibung

Die vorliegende Erfindung liegt auf dem Gebiet der Silikone und der silikonisierten Papiere und befasst sich insbesondere mit der stofflicher Wiederverwertung silikonisierter Papiere.

Es ist bekannt, bestimmte Flächengebilde, und zwar insbesondere papierne sowie polymere Flächengebilde, mit Silikon zu beschichten, um die Oberfläche des Flächengebildes zu modifizieren beispielsweise, um eine antihaftende Oberfläche zu erzeugen. Man spricht dann von silikonisierten Flächengebilden, d.h. silikonisierte Flächengebilde sind mit Silikon beschichtete Flächengebilde. Entsprechende silikonbeschichtete Papiere oder polymere Folien sind für unterschiedliche Verwendungszwecke im Markt verfügbar.

Silikonbeschichtetes Papier, das im Sinne dieser Erfindung auch als silikonisiertes Papier bezeichnet wird, kann z.B. als Trägerpapier für Haftklebeetiketten, Selbstklebefolien, Selbstklebebänder oder als Trennpapier für die PVC-Folienherstellung verwendet werden. Es fällt sowohl beim Hersteller als auch beim Verarbeiter in beträchtlichen Mengen an und der mit Abstand größte Anteil hiervon wird nach Erfüllung seiner Funktion deponiert oder thermisch entsorgt, das heißt, verbrannt. Bisher werden nur in Ausnahmefällen aus diesen Papieren qualitativ geringerwertige Papiere für Verpackungszwecke hergestellt.

Die Bedeutung dieses Themas für eine angestrebte Kreislaufwirtschaft geht beispielsweise aus Produktionszahlen der Jahre 2008 und 2010 hervor, die dem PTS-Forschungsbericht IGF_16407 (Papiertechnische Stiftung), Entwicklung eines Strichkonzepts zur Herstellung von Silikontrennpapieren unter Einsatz der Mehrschicht-Curtain Coater Technologie, M. Stäubner, H. Schmid, www.ptspaper.de entnommen sind. Dort heißt es auf Seite 6: "Die im Jahr 2008 weltweit produzierte Menge an Trennpapier von 33,7 Milliarden m² wurde in 2010 auf lediglich 33,98 Milliarden m² gesteigert. Davon wurden allein 52% in 2008 bzw. 51 ,5%in 2010 für Etiketten genutzt."

Der Stand der Technik referiert verschiedene Anstrengungen für das Recycling silikonbeschichteter Papiere. So beansprucht die Lehre der EP 0587000 A1 ein Verfahren zum Recycling von silikonbeschichtetem Papier in Flotations-De-Inking-Apparaturen unter Einsatz 10%iger Natronlauge durch Aufschlagen und Neubildung von Blättern, was dadurch gekennzeichnet ist, dass das Aufschlagen in Gegenwart eines oder mehrerer Salze von Phosphorsäureestern fluorierter Alkanole erfolgt. Den Ausführungen der Lehre folgend ist der Einsatz dieser exotischen Prozesshilfsmittel notwendig, um typische Probleme im alkalisch gefahrenen Recyclingprozess wie mangelnde Stoffauflösung, unvollständige Harzdispergierung sowie die Bildung von Harzagglomeraten und der damit verbundenen Gefahr des Klebens an Zylinderoberflächen und Filzen, zu vermeiden.

Ein weiterer, jedoch rein auf eine werkstoffliche Verwertung ausgerichteter Prozess zum Recycling silikonbeschichteter zellulosebasierter und/ oder polymerer Trägersysteme wird von der Firma Reculiner (Belgien) in der EP 2542728 B1 beansprucht. Hier wird zum Beispiel silikonbeschichteter Trennpapierabfall zur Zellulosefaserdämmung (ZFD), die dem Wärme- und Lärmschutz im Baubereich dient, genutzt. Das Trennpapier wird zum Beispiel mit Flammschutzmitteln behandelt und danach, anhand von speziell entwickelten Geräten, zu leichten Flocken verarbeitet. Man wirbt damit, dass einer der wichtigsten Vorteile der Zellulosefaserdämmung, die nicht aus konventionellem Altpapier (wie zum Beispiel Zeitungen), sondern aus einem derartigen Trennpapier gewonnen wird, in der größeren Elastizität der darin enthaltenen Faser läge. Diese Eigenschaft soll dann zu einer besseren Fixierung, das heißt einer verbesserten Resistenz gegen das eventuelle Absinken des Dämmstoffs, nachdem er in eine Hohlmauer geblasen wurde, führen. Im Vergleich zur traditionellen Zellulosefaserdämmung, die man vorzugsweise aus alten Zeitungen gewinnt, soll eine weitere Verbesserung des RecuLiner-Materials in seiner erhöhten Fließfähigkeit liegen, was dessen Anwendung vereinfacht.

Die WO2022/086456 A1 lehrt einen Prozess zur Druckfarbenentfernung und zum Desilikonisieren von Papierprodukten, der die Schritte des Zellstoff-Screenings und der Behandlung des Papiers mit einer wässrigen Lösung, die Alkylenglykolether, Natriumhydroxid, Natriumsilicat, Wasserstoffperoxid und ein Tensid enthält, umfasst. In Anlehnung an das Vorgehen der EP 0587000 A1 arbeitet man im Silikon entfernenden Arbeitsschritt mit der Flotation, um das von der Papieroberfläche gelöste Silikon bzw. auch die Druckfarbe durch gezielten Lufteintrag an die Oberfläche der wässrigen Aufschlusslösung zu befördern. Die abgetrennte Druckfarbe bzw. das abgetrennte Silikon werden dann zum Beispiel durch Verbrennung entsorgt.

Die WO2022/086456 A1 zeigt, dass sich der zweistufige Flotationsprozess nur für solche Papierabfälle eignet, die überwiegend, das heißt, zu 70 Gewichtsprozent oder mehr aus gebrauchtem Druck- und Schreibpapier und zu höchstens 30 oder vorzugsweise weniger Gewichtsprozenten aus Silikon-beschichtetem Papier bestehen, da man sonst betriebsstörende, mechanische Verblockungen im Leitungssystem der Papieraufarbeitungsanlage erfährt. Dabei ist das mehrphasige, wässrige Aufschlusssystem hinsichtlich der verwendeten Einsatzstoffe und deren wirksamen Konzentrationen genau zu justieren, um gute Resultate sowohl im Hinblick auf die Druckfarbenentfernung als auch die Desilikonisierung zu erreichen. Die dann mit dem Verfahren unter optimalen Bedingungen erzielbaren Restsilikongehalte von kleiner 100 ppm gestatten die Verwendung des Recyclingpapiers als Druckpapier.

Die EP3885096 A1 beschreibt ein Verfahren zur stofflichen Wiederverwertung silikonisierter Flächengebilde, insbesondere silikonisierter Papiere oder silikonisierter, polymerer Folien, wobei die Behandlung des silikonisierten Flächengebildes in einem flüssigen Aufschlusssystem erfolgt, das Essigsäureanhydrid und/oder ein Acetoxysiloxan, sowie zumindest eine Brönstedsäure, gegebenenfalls Lösungsmittel sowie bevorzugt Essigsäure enthält. Die Desilikonisierung in dieser speziellen organischen Matrix verläuft sehr effektiv jedoch ist die Verwendung von Brönstedsäuren, hierbei insbesondere von Schwefelsäure oder von organischen Sulfonsäuren, immer mit der Beeinträchtigung verbunden, nach Abtrennen der flüssigen organischen Phase ein mehr oder minder verfärbtes, de-silikonisiertes Papier zu isolieren.

In Sicht dieses Standes der Technik bleibt es grundsätzlich wünschenswert, ein leistungsfähiges De-Silikonisierverfahren bereitzustellen, welches z.B. die Vorteile einer effektiven Silikonentfernung von ausschließlich Silikon-beschichtetem Papier, wie sie in der EP 3885096 A1 offenbart ist, vereint mit dem Zusatznutzen, den de-silikonisierten Papierträger möglichst unverfärbt zurückzugewinnen.

Gleichfalls wäre es darüber hinaus noch wünschenswert, wenn ein De-Silikonisierverfahren auch die Möglichkeit einer Wiederverwendung der aus der Beschichtung stammenden Siloxanbestandteile bieten könnte, so dass eine stoffliche Wiederverwertung des Silikon-beschichteten Papiers in großem Umfang gelingen würde.

Vornokov und Shabarova beschreiben in Zh. Obshch. Khim.1959,29,1528-1534 (Russian Journal of General Chemistry 1959, 29, 1528-1534) die Herstellung von Organoalkoxysilanen durch Spaltung von Organosiloxanen mit C4- bis C12-Alkoholen unter basischen Bedingungen, wobei Alkalimetallhydroxide, Alkalimetallalkoholate oder die Alkalimetalle selbst zum Einsatz gelangen. Die Autoren interpretieren die Reaktion des Organosiloxans mit Alkohol als eine Gleichgewichtreaktion, bei der es darauf ankommt, Reaktionswasser azeotrop oder unter Zuhilfenahme eines inerten, wasserunlöslichen Lösungsmittels oder aber präferiert unter Hinzufügung von Kieselsäureestern (Tetraalkoxysilanen) als wasserentziehende Mittel aus dem Reaktionssystem zu entfernen. Ohne Nutzung wasserentziehender Reagenzien ist hiernach weder die Herstellung von Alkoxysilanen möglich, die sich von Alkoholen mit Siedepunkten kleiner 90°C herleiten, noch das Erzielen hoher Ausbeuten an Alkoxysilanen. Für die Herstellung von Alkoxysiloxanen weist die Publikation hingegen keinen Lösungsweg auf, denn für den Fachmann verständlich würde insbesondere der Verbleib hochsiedender Tetraalkoxysilane (zum Beispiel Tetraethoxysilan Kp. 168°C) sowie der daraus entstehenden Kondensationsprodukte einen erheblichen Trenn- und Reinigungsaufwand nach sich ziehen.

In der noch nicht veröffentlichten europäischen Patentanmeldung mit dem Anmeldeaktenzeichen 22190105.1 wird ein neues Verfahren für das Recycling von Abfallsilikonen, wie z.B. von alten Anguss- und/ oder Stanzabfällen aus der Silikonkautschuk-Produktion oder ausrangiertem Elektronikschrott, der silikonversiegelte Bauteile/ Bauteilgruppen enthält, durch deren chemische Transformation in Alkoxygruppen aufweisende Siloxane beschrieben, wobei man die thermische Umsetzung des Abfallsilikons mit einem Alkalimetallalkoholat und einem Alkohol ohne Entfernung von etwaig auftretendem Wasser vornimmt und das aus dieser Reaktion hervorgehende Reaktionsgemisch in einem zweiten Schritt mit Hilfe einer Brönstedsäure, eventuell noch unter Hinzufügen von einem Solvens neutralisiert, danach die festen Bestandteile abtrennt, insbesondere abfiltriert, und danach das Alkoxysiloxan durch thermisches Abtrennen flüchtiger Verbindungen isoliert.

Das Recycling silikonisierter Flächengebilde wie z.B. silikonisierter Papiere wird dort allerdings nicht offenbart.

Vor diesem Hintergrund lag die konkret zu lösende Aufgabe der vorliegenden Erfindung in der Bereitstellung eines Verfahrens zur stofflichen Wiederverwertung silikonisierter Papiere mit dem Ziel, das de-silikonisierte Papier möglichst unverfärbt zurückgewinnen zu können. Die konkrete Aufgabe der Erfindung wird gelöst vom Gegenstand der Erfindung.

Gegenstand der Erfindung ist ein Verfahren zur stofflichen Wiederverwertung silikonisierter Papiere, umfassend zumindest die folgenden Schritte:

| | |
|---|---|
| erster Schritt (a): | Behandlung mindestens eines silikonisierten Papiers unter Kontaktierung mit mindestens einem Alkohol und mindestens einem Alkalimetallalkoholat unter Wärmeeintrag, und zwar ohne Entfernung von etwaig auftretendem Wasser aus der Reaktionsmischung, vorzugsweise ohne den Einsatz von mit Wasser Azeotrope bildenden Solventien und/oder ohne den Einsatz weiterer, wasserentziehender Mittel, |
| und danach, | |
| zweiter Schritt (b): | Abtrennen des aus dem ersten Schritt (a) resultierenden, mindestens einen de-silikonisierten Papiers aus der gegebenenfalls zuvor neutralisierten Reaktionsmischung. |

Auf diese Weise wird somit der Weg zu einer stofflichen Wiederverwendung der jeweiligen silikonisierten Papiere geöffnet, der es ermöglicht, das de-silikonisierte Papier möglichst unverfärbt zurückgewinnen zu können.

Das erfindungsgemäße Verfahren sieht die Behandlung mindestens eines silikonisierten Papiers vor. Die im erfindungsgemäßen Verfahren einsetzbaren silikonisierten Papiere umfassen insbesondere auch alle im Markt bekannten silikonisierten Papiere. Sowohl Papiere als auch silikonisierte Papiere sind dem Fachmann wohlbekannt. Papiere sind die dem Fachmann bekannten flächigen Materialien, welche auf dem Fachmann bekannte Weise üblicherweise aus Faserstoffen, wie insbesondere Holzstoffen, Altpapierstoff und/oder Zellstoff, herstellbar sind.

Silikonisierte Papiere sind im Sinne dieser Erfindung alle Papiere, die eine Silikonbeschichtung aufweisen. Dabei kann es sich um ein- oder beidseitig mit Silikon beschichtete Papiere handeln. Solche silikonisierten Papiere sind dem Fachmann bekannt, sie sind kommerziell erhältlich und im Markt weit verbreitet, beispielsweise als Trennpapiere oder z.B. auch bei der Verpackung von Lebensmitteln als Verpackungspapiere.

Die Art der Silikonbeschichtungen ist nicht kritisch und umfasst alle im Markt bekannten Silikonbeschichtungen, welche zur Beschichtung von Papieren tauglich sind, insbesondere die etablierten lösungsmittelfreien oder lösungsmittelhaltigen, Platin katalysierten Systeme, aber auch einfach zu verarbeitende, UV-aktivierte Systeme mit radikalischer oder kationischer Polymerisation.

Bevorzugt wird unter dem Begriff des "silikonisierten Papiers" im Rahmen dieser Erfindung ein- oder beidseitig mit Silikon beschichtetes Papier verstanden, bei welchem die Silikonbeschichtung vorzugsweise die Funktion einer Trennbeschichtung ausübt.

Bevorzugte Silikonbeschichtungen im Sinne der vorliegenden Erfindung sind folglich Trennbeschichtungen aus Silikon bzw. Silikonmaterialien.

Trennbeschichtungen aus Silikon bzw. Silikonmaterialien, welche auch als abhäsive Beschichtungen oder Release Coatings bezeichnet werden können, sind aus dem Stand der Technik bekannt und in der Patentliteratur beschrieben, wie z.B. in WO2020126655A1. Sie können beispielsweise in Etikettenlaminaten Anwendung finden. Sie können vorzugsweise zum Schutz von klebrigen Oberflächen vor Verschmutzung oder unbeabsichtigtem Festkleben dienen. Beispielsweise können Trennbeschichtungen insbesondere bei Papieren verwendet, um die Adhäsionsneigung von adhärierenden Produkten gegenüber diesen Papieren zu verringern.

Die Silikonbeschichtungen, bevorzugt Trennbeschichtungen aus Silikon bzw. Silikonmaterialien, können auf übliche aus dem Stand der Technik bekannte Weise hergestellt werden, vorzugsweise können sie aus einem oder mehreren Organosiloxanen durch Vernetzung hergestellt werden.

Vorzugsweise kann die Vernetzung thermisch über eine Hydrosilylierungsreaktion zwischen einer SiH-Gruppen aufweisenden Verbindung und einer ethylenisch ungesättigten Verbindung bevorzugt in Gegenwart eines Katalysators erfolgen, vorzugsweise bei höheren Temperaturen von in der Regel z.B. über 100 °C.

Beispielsweise ist es alternativ auch möglich, die Silikonbeschichtungen vorzugsweise durch Vernetzung von Silikonen mit ethylenisch ungesättigten, radikalisch polymerisierbaren Gruppen durch Bestrahlung mit energiereicher Strahlung oder thermisch in Gegenwart von geeigneten Initiatoren oder Radikalstartern herzustellen.

Bevorzugt einsetzbare Organosiloxane sind beispielsweise Silikone, welche ethylenisch ungesättigte, radikalisch polymerisierbare Gruppen aufweisen, wie zum Beispiel (meth)acrylatmodifizierte Organosiloxane. (Meth)acrylatmodifizierte Organosiloxane sind dem Fachmann wohlbekannt und in zahlreichen Patentschriften beschrieben, z.B. in US6211322 und US4978726.

Vorzugsweise können die Organosiloxane, vorzugsweise (meth)acrylatmodifizierte Organosiloxane, dreidimensional durch freie Radikale vernetzt werden und können vorzugsweise thermisch unter Zusatz von z. B. Peroxiden oder unter Einfluss energiereicher Strahlung, wie z.B. UV- oder Elektronenstrahlung, innerhalb kürzester Zeit aushärten, vorzugsweise zu mechanisch und chemisch widerstandsfähigen Schichten. Bei Verwendung von UV-Licht als Strahlungsquelle kann es bevorzugt sein, dass die Vernetzung vorzugsweise in Anwesenheit von Photoinitiatoren und/oder Photosensibilisatoren erfolgt, wie beispielsweise Benzophenon, Benzoin, α-Hydroxyalkylphenon, Acylphosphinoxid oder ihren Derivaten. Übliche Photoinitiatoren werden beispielsweise beschrieben in "A Compilation of Photoinitiators Commercially available for UV today" (K. Dietliker, SITA Technology Ltd, London 2002*).*

Weder den Weg einer nur werkstofflichen Verwertung noch den eingangs beschrieben Weg eines De-Inkings unter Verwendung exotischer Prozesshilfsmittel (EP 0587000 A1) von zellulosehaltigen und/ oder polymeren silikonisierten Trägersystemen beschreitend, eröffnet das erfindungsgemäße Verfahren somit zum ersten Mal eine neue, bislang ungenutzte Möglichkeit zur stofflichen Wiederverwertung, vorzugsweise zur vollständigen stofflichen Wiederverwertung silikonisierter Papiere, insbesondere der silikonisierten Release-Liner-Systeme auf Zellulosebasis.

Unter Release-Liner im Sinne dieser Erfindung werden Papierträger verstanden, deren Zweck darin besteht, eine klebrige Oberfläche an deren vorzeitiger Adhäsion zu hindern. Diese Papiere werden ein- beziehungsweise zweiseitig mit einem silikonbasierten Trennmittel beschichtet. Unter Release wird die Trennung des beschichteten Papierträgers von einem klebrigen Material, wie zum Beispiel von Selbstklebeetiketten verstanden.

Insbesondere kann das erfindungsgemäße Verfahren herangezogen werden, um eine sortenreine Rückgewinnung von natürlichen Wertstoffen (vorzugsweise der Papierbestandteile, insbesondere der Zellulose) zu ermöglichen, die in intensiven Kontakt mit Silikonmaterialien gebracht wurden.

Darüber hinaus kann das erfindungsgemäße Verfahren vorzugsweise zusätzlich auch noch das Recycling der Beschichtungssilikone ermöglichen und zwar insbesondere durch deren chemische Transformation in Alkoxygruppen aufweisende Siloxane und/oder Silane. Diese können, gegebenenfalls noch in Kombination mit weiteren reaktiven Silanen und/ oder Silikonen, zu einer Vielzahl von wertvollen Silikonfolgeprodukten weiterverarbeitet werden. Dies ist ein weiterer, sehr wesentlicher Vorteil der vorliegenden Erfindung.

Ein großer Vorteil der Erfindung liegt darin, dass die Papiere, welche die Silikonbeschichtung tragen, im Wesentlichen weiß bzw. unverfärbt aus dem De-Silikonisierungsschritt hervorgehen können, so dass deren uneingeschränkter Wiederverwendung im Bereich der Papierproduktion nichts im Wege steht.

Nachfolgend werden das erfindungsgemäße Verfahren sowie bevorzugte Ausführungsformen des erfindungsgemäßen Verfahrens genauer beschrieben.

Der erste Schritt (a) des erfindungsgemäßen Verfahrens sieht die Behandlung mindestens eines silikonisierten Papiers unter Kontaktierung mit mindestens einem Alkohol und mindestens einem Alkalimetallalkoholat unter Wärmeeintrag vor.

Das bedeutet, man lässt mindestens einen Alkohol zusammen mit mindestens einem Alkalimetallalkoholat unter Wärmeintrag und vorzugsweise unter Eintrag mechanischer Energie auf das zu behandelnde mindestens eine silikonisierte Papier einwirken. Der mindestens eine Alkohol sowie das mindestens eine Alkalimetallalkoholat werden also zusammen eingesetzt, insbesondere wird das mindestens eine silikonisierte Papier unter Durchmischung zusammen mit dem mindestens ein Alkohol und dem mindestens ein Alkalimetallalkoholat unter Wärmeeintrag umgesetzt.

Vorzugsweise kann das mindestens eine silikonisierte Papier vor Durchführung des ersten Schrittes (a) optional noch zerkleinert werden, z.B. mit Schneidwerkzeugen.

Der erste Schritt (a) dient der De-Silikonisierung des mindestens einen silikonisierten Papiers, so dass aus dem ersten Schritt (a) mindestens ein de-silikonisiertes Papier resultiert. "De-Silikonisierung" des silikonisierten Papiers heißt, dass die Silikonschicht des silikonisierten Papiers von dem Papier entfernt wird.

Das gesamte aus dem ersten Schritt (a) resultierende, mindestens eine de-silikonisierte Papier wird danach in einem zweiten Schritt (b) aus der gegebenenfalls zuvor neutralisierten Reaktionsmischung abgetrennt.
D.h. eine Neutralisierung der Reaktionsmischung vor Abtrennung des gesamten de-silikonisierten Papier ist optional möglich, aber nicht zwingend.

Gemäß einer ganz besonders bevorzugten Ausführungsform wird das erfindungsgemäße Verfahren in Schritt a) unter Zusatz von Ethanol und Kaliummethylat durchgeführt.

Für den ersten Schritt (a) gilt zudem, dass die Behandlung ohne Entfernung von etwaig auftretendem Wasser aus der Reaktionsmischung erfolgt.

Vorzugsweise erfolgt der erste Schritt (a) unter Wärmeeintrag in einem Temperaturbereich zwischen 50°C und 200°C, weiter bevorzugt zwischen 80°C und 180°C, insbesondere zwischen 80°C und 120°C. Dieses entspricht einer bevorzugten Ausführungsform der Erfindung. Der Wärmeeintrag kann über die üblichen, dem Fachmann bekannten Methoden erfolgen, insbesondere unter Einsatz eines Heizmediums, beispielsweise über die Reaktorwand.

Unter Alkalimetallalkoholat werden im Rahmen dieser Erfindung vorzugsweise Verbindungen der allgemeinen Formel:

[M⁺][OR⁻]

verstanden, wobei
- M: ausgewählt ist aus der Gruppe bestehend aus Li, Na und K, bevorzugt ausgewählt aus der Gruppe bestehend aus Na und K
- und R: einen linearen, verzweigten oder zyklischen Alkylrest darstellt, bevorzugt mit 1 bis 10 Kohlenstoffatomen, besonders bevorzugt mit 1 bis 6 Kohlenstoffatomen, ganz besonders bevorzugt mit 1 oder 2 Kohlenstoffatomen; gemäß einer bevorzugten Ausführungsform der Erfindung wird das mindestens eine Alkalimetallalkoholat dementsprechend aus den vorgenannten Verbindungen ausgewählt.

Es wird in dem erfindungsgemäßen Verfahren mindestens ein Alkalimetallalkoholat eingesetzt.

Besonders bevorzugt ist der Einsatz von Kaliumethanolat, Natriumethanolat, Kaliummethanolat und/oder Natriummethanolat, insbesondere bevorzugt ist Kaliummethanolat.

Zu den bekannten Verfahren der möglichen Herstellung von Alkoholaten gehört die ChloralkaliElektrolyse nach dem Amalgam-Verfahren, bei der Natriumamalgam mit Alkohol umgesetzt wird [vgl. z. B. Chemical and Engineering News 22, 1903-06 (1944)].

Eine weitere bekannte Methode ist z.B. die Herstellung von Alkoholaten aus einem Alkalimetall und einem Alkohol bzw. aus einem Alkalihydroxid und einem Alkohol. Die Alkoholatproduktion aus einem Alkalimetall und einem tertiären Alkohol ist z. B. aus DE-23 33 634 (Dynamit Nobel) oder DE-26 12 642 (Degussa) bekannt. Die Herstellung eines Alkoholats aus einem Alkalihydroxid und einem tertiären Alkohol ist ebenfalls bekannt. Die erste Verfahrensvariante erfordert den Einsatz von teurem Alkalimetall, und bei der zweiten Variante ausgehend vom Alkalihydroxid muss das bei der Umsetzung entstehende Wasser destillativ entfernt werden, was den entsprechenden hohen thermischen Aufwand erfordert.

Der Lehre der DE-A-33 46 131 gemäß können Alkalialkoholate z.B. auch elektrolytisch aus Salzen hergestellt werden, wobei eine Elektrolysezelle, bei der eine Kationenaustauschmembran die Elektrodenräume trennt, eingesetzt wird. In DE-42 33 191.9-43 wird z.B. ein Verfahren beschrieben, dass die Herstellung eines Alkalialkoholats aus einem Salz durch Elektrodialyse ermöglicht.

Ebenfalls sind Verfahren zur Herstellung von Sonderalkoholaten, wie zum Beispiel den Alkoholaten höherer und/oder mehrwertiger Alkohole vereinzelt beschrieben.

Alkoholate höherer und/oder mehrwertiger Alkohole lassen sich z.B. bekanntlich grundsätzlich durch Umalkoholisieren, d. h., durch Substitution des Alkoholatrestes niederer Alkoholate ROM durch Umsetzung mit höheren Alkoholen R'OH (wobei R und R' Alkylreste unterschiedlicher Kohlenstoffkettenlänge sind und M ein Metallkation bezeichnet) in einem flüssigen Reaktionsgemisch bei geeigneten Temperatur - und Druckverhältnissen herstellen. Diese Umsetzung wird im Laborjargon auch als "Umkochen" bezeichnet. Die Lage des Gleichgewichts

ROM + R'OH ⇔ ROH + R'OM

hängt von der Acidität der beiden Alkohole ab, die in der Reihenfolge Methanol > primäre > sekundäre > tertiäre Alkohole abnimmt [R. T. Mclver und J. A. Scott, J. American Chem. Soc. 96 (1973) 2706]. Daher soll die Herstellung der Alkoholate sekundärer Alkohole auf diesem Wege nur in Ausnahmefällen möglich sein und die Herstellung der Alkoholate tertiärer Alkohole durch Umalkoholisierung gar nicht gelingen ["Methoden der Organischen Chemie" (1963) Bd. 6/2, S. 13]. Jedoch wurde die Herstellung von Alkoholaten durch Umkochen in DE-1 254 612 und in DE-27 26 491 (beide von Dynamit Nobel) auch für höhere Alkohole beschrieben. GB-1 143 897 (Metallgesellschaft) beschreibt z.B. die Umsetzung eines einwertigen Alkalialkoholats mit einem bis zu sechs Hydroxylgruppen enthaltenden C2- bis C18-Alkohol oder -Phenol, wobei als Lösungsmittel ein Überschuss an einwertigem Alkohol und/oder ein Kohlenwasserstoff eingesetzt wird.

Das Umkochen führt aber immer zur Bildung des leichtsiedenden Alkohols ROH (z. B. Methanol), der zur Isolierung des gewünschten Alkoholats - gegebenenfalls zusätzlich zum nicht umgesetzten höheren Alkohol R'OH - aus dem Reaktionsproduktgemisch zum Teil mit erheblichem thermischen Aufwand abgetrennt werden muss.

Abseits dieser thermisch geführten Gleichgewichtsverschiebungen lehrt z.B. die EP0776995 (B1) ein Verfahren zur Herstellung von Alkoholaten unter dem Einfluss eines elektrischen Feldes, wobei ein Alkohol durch Zufuhr von Metallionen in das gewünschte Alkoholat umgesetzt wird und die Metallionen selbst aus der elektrochemischen Zerlegung eines anderen Alkoholates in dem elektrischen Feld stammen; die Alkoholatbildung und die -zerlegung erfolgen in räumlich durch lonenaustauschmembranen getrennten Kammern.

Das im ersten Schritt (a) des erfindungsgemäßen Verfahrens eingesetzte, mindestens eine Alkalimetallalkoholat wird vorzugsweise in einer Gesamt-Menge von 1 bis 10 Massen-%, bevorzugt von 2 bis 7 Massen-%, besonders bevorzugt von 3 bis 6 Massen-% eingesetzt, bezogen auf die Masse des bei der Umsetzung insgesamt verwendeten Silikons, welches der Masse des gesamten Silikons, mit welchem das mindestens eine silikonisierte Papier beschichtet ist, entspricht. Dies entspricht einer bevorzugten Ausführungsform der Erfindung.

Das erfindungsgemäße Verfahren wird in dem ersten Schritt (a) vorzugsweise im Temperaturbereich von 50°C bis 200°C, bevorzugt im Temperaturbereich von 80°C bis 180°C, weiter bevorzugt im Temperaturbereich von 80°C bis 120°C und über einen Zeitraum von vorzugsweise 1 bis 12 Stunden, bevorzugt über einen Zeitraum von 2 bis 8 Stunden und das jeweils bevorzugt lösemittelfrei durchgeführt. Dies entspricht einer weiteren besonders bevorzugten Ausführungsform der Erfindung.

Gemäß einer weiteren bevorzugten Ausführungsform der Erfindung ist der im ersten Schritt (a) des erfindungsgemäßen Verfahrens eingesetzte, mindestens eine Alkohol ausgewählt aus der Gruppe bestehend aus lineare, verzweigte und zyklische C1 bis C10- Alkanole, wobei vorzugsweise Methanol, Ethanol, 1- Propanol, Isopropanol, 1-Butanol, 2-Butanol, iso-Butanol, Pentanole, Hexanole, Heptanole, Octanole, Nonanole und/oder Dekanole, und/oder deren Isomere, eingesetzt werden, besonders bevorzugt werden Methanol und/oder Ethanol, insbesondere Ethanol, eingesetzt.

Der im ersten Schritt (a) des erfindungsgemäßen Verfahrens eingesetzte, mindestens eine Alkohol wird vorzugsweise in einer Gesamt-Menge von 10 bis 200 Massen-%, bevorzugt 20 bis 100 Massen-%, besonders bevorzugt 30 bis 80 Massen-% eingesetzt, bezogen auf die Masse des bei der Umsetzung insgesamt verwendeten Silikons, welches der Masse des gesamten Silikons, mit welchem das mindestens eine silikonisierten Papier beschichtet ist, entspricht. Dies entspricht einer weiteren besonders bevorzugten Ausführungsform der Erfindung.

Die Gewährleistung einer guten Kontaktierung, insbesondere Durchmischung, des mindestens einen silikonisierten Papiers mit dem mindestens einen Alkohol und dem mindestens einen Alkalimetallalkoholat im ersten Schritt a) des erfindungsgemäßen Verfahrens ist bevorzugt und kann die Leichtigkeit, mit der der Auflösungsprozess stattfindet, vorzugsweise positiv beeinflussen.

Vorzugsweise können die aus dem ersten Schritt (a) resultierende Reaktionsmischung und/oder das im zweiten Schritt (b) abgetrennte, mindestens eine de-silikonisierten Papier mit mindestens einer Brönstedsäure behandelt werden. Dies entspricht einer weiteren besonders bevorzugten Ausführungsform der Erfindung.

Vorzugsweise wird das abgetrennte, mindestens eine de-silikonisierte Papier mit Hilfe mindestens einer Brönstedsäure behandelt. Dies kann insbesondere zur Neutralisation der auf der Papieroberfläche vorhandenen Alkalität geschehen, die das Papier aus der Reaktionsmischung von der alkoholischen Alkoholatlösung mitgenommen hat.

Für diese optionalen Behandlung des mindestens einen desilikonisierten Papiers wird vorzugsweise mindestens eine nicht-oxidierende Brönstedsäure, besonders bevorzugt mindestens eine mit Wasser verdünnte Brönstedsäure eingesetzt, wobei die Konzentration der verdünnten Brönstedsäure in Wasser vorzugsweise zwischen 10 und 50 Gew.-%, bevorzugt zwischen 15 und 40 Gewichtsprozent liegt.

Hierzu kann vorzugsweise so vorgegangen werden, dass das mindestens eine desilikonisierte Papier, vorzugsweise das zerkleinerte oder z.B. in ganzen Papierbahnen vorliegende, desilikonisierte Papier, mit mindestens einer Brönstedsäure in Kontakt gebracht.

Diese optionale Behandlung kann z.B. in üblichen Reaktoren erfolgen, vorzugsweise in einem Reaktionskessel mit Rührer, so dass bewirkt wird, dass das mindestens eine desilikonisierte Papier mit der mindestens einen Brönstedsäure in Kontakt gebracht wird. Vorzugsweise trennt man danach die Flüssigphase vom so behandelten, desilikonisierten Papier ab, unterwirft dieses vorzugsweise einer anschließenden Wäsche mit vollentsalztem Wasser, trennt es von der Waschwasserphase ab und überführt das Papier dann zum Entfeuchten vorzugsweise in einen technischen Trockner, wie zum Beispiel in einen Trockenofen. Solches optionales Vorgehen entspricht einer weiteren besonders bevorzugten Ausführungsform der Erfindung.

Im Falle eines z.B. in Form von Papierbahnen vorliegenden desilikonisierten Papiers kann die optionale Behandlung des noch oberflächliche Alkalität aufweisenden mindestens einen desilikonisierten Papiers im Rahmen einer bevorzugten Ausfühungsform der Erfindung vorzugsweise in einem Walzenstuhl erfolgen, indem das betreffende desilikonisierte Papier zunächst von einer Walze abgerollt, durch ein brönstedsaures Tauchbad gezogen und hinter dem Tauchbad vorzugsweise durch eine anschließende Wäsche mit vollentsalztem Wasser und dann durch eine Trockenstufe, vorzugsweise Trockenofen, geführt wird, um dann auf einer Walze wieder aufgerollt zu werden. Solches optionales Vorgehen entspricht einer bevorzugten Ausführungsform der Erfindung.

Bei der optionalen Behandlung mit mindestens einer Brönstedsäure erfährt die mit einer alkoholischen Alkoholatlösung benetzte, desilikonisierte Papieroberfläche insbesondere dahingehend Neutralisation, dass sich aus dem Alkoholat und der Säure ein Salz und ein Alkohol bilden.

Bei der optionalen Behandlung mit mindestens einer Brönstedsäure ist es besonders bevorzugt, mit Wasser verdünnte Brönstedsäuren einzusetzen, die das entstehende Salz der Brönstedsäure und vozugsweise die aus der bevorzugten Verwendung von Kaliumethanolat, Natriumethanolat, Kaliummethanolat und/oder Natriummethanolat, und insbesondere Kaliummethanolat stammenden Alkoholen Ethanol bzw. Methanol zu lösen vermögen. Zu den besonders bevorzugt einzusetzenden Säuren zählen verdünnte Schwefelsäure (vorzugsweise 10 bis 25 Gew.-% in Wasser), verdünnte Perchlorsäure (vorzugsweise 10 bis 25 Gew.-% in Wasser) und/oder verdünnte Essigsäure (vorzugsweise 10 bis 30 Gew.-% in Wasser).

Für den Fachmann verständlich sind oxidierende Säuren, wie z.B. konzentrierte Schwefelsäure, konzentrierte Salpetersäure, konzentrierte Perchlorsäure und konzentrierte Sulfonsäuren insbesondere für die direkte Behandlung des desilikonisierten Papiers, zu vermeiden, da diese womöglich durch Oxidation der Zellulose im Papier zumindest eine farbliche Beeinträchtigung im Sinne einer Dunkelfärbung, wenn nicht gar eine Zerstörung des Papieres bewirken können.

Vorzugsweise wird die vom dem mindestens einen de-silikonisierten Papier abgetrennte Reaktionsmischung mit Hilfe von mindestens einer wasserfreien Brönstedsäure neutralisiert, was einer weiteren besonders bevorzugten Ausführungsform der Erfindung entspricht. Die hierfür besonders geeignete mindestens eine wasserfreie Brönstedsäure ist vorzugsweise ausgewählt aus der Gruppe bestehend aus wasserfreien anorganischen Säuren und wasserfreien organischen Säuren, insbesondere ausgewählt aus der Gruppe bestehend aus wasserfreier Schwefelsäure, wasserfreier Perchlorsäure und wasserfreier Essigsäure. Solches Vorgehen ermöglicht es, aus dem erfindungsgemäßen Prozess vorzugsweise Alkoxysiloxane zu gewinnen und entspricht einer weiteren besonders bevorzugten Ausführungsform der Erfindung.

Es entspricht noch einer weiteren besonders bevorzugten Ausführungsform der Erfindung, wenn die aus dem ersten Schritt (a) resultierende Reaktionsmischung vor dem Abtrennen des mindestens einen de-silikonisierten Papiers mit Hilfe von mindestens einer Brönstedsäure neutralisiert wird, welche vorzugsweise ausgewählt ist aus nicht-oxidierenden, besonders bevorzugt mit Wasser verdünnten Brönstedsäuren, insbesondere ausgewählt ist aus der Gruppe bestehend aus verdünnter Schwefelsäure, verdünnter Perchlorsäure und verdünnter Essigsäure, wobei die Konzentration der verdünnten Brönstedsäure in Wasser vorzugsweise zwischen 10 und 50 Gew.-%, bevorzugt zwischen 15 und 40 Gewichtsprozent liegt.

Weiterhin kann es bevorzugt sein, das erhaltene, mindestens eine de-silikonisierte Papier zu reinigen, z.B. um es salz- und säurefrei zu machen. Es entspricht daher einer weiteren besonders bevorzugten Ausführungsform der Erfindung, wenn das erhaltene, mindestens eine de-silikonisierte Papier, vorzugsweise das mit Hilfe von mindestens einer Brönstedsäure behandelte, de-silikonisierte Papier gewaschen wird, vorzugsweise mit vollentsalztem Wasser.

Weiterhin kann es bevorzugt sein, das de-silikonisierte Papier zu trocknen. Es entspricht daher einer weiteren besonders bevorzugten Ausführungsform der Erfindung, wenn das mindestens eine de-silikonisierte Papier, vorzugsweise mit Hilfe von mindestens einer Brönstedsäure behandelte und insbesondere gewaschene de-silikonisierten Papier, getrocknet wird, vorzugsweise thermisch und/oder gegebenenfalls durch Kontaktierung mit mindestens einem organischen Lösungsmittel.

Die Umsetzung in dem ersten Schritt (a) erfolgt ohne Entfernung von etwaig auftretendem Wasser aus der Reaktionsmischung. Es wird kein Wasser aus der Reaktionsmischung entfernt, vorzugsweise weder durch den Einsatz von mit Wasser Azeotrope bildenden Solventien noch durch den Einsatz weiterer, wasserentziehender Mittel.

Wenn also die Behandlung in dem ersten Schritt (a) des erfindungsgemäßen Verfahrens ohne die Verwendung wasserbindender Kieselsäureester, insbesondere ohne Einsatz von Tetraalkoxysilanen, vorgenommen wird, so entspricht das einer weiteren besonders bevorzugten Ausführungsform der Erfindung.

Gemäß einer weiteren bevorzugten Ausführungsform der Erfindung kann man die Erfindung gewünschtenfalls auch unter Nutzung eines Walzenstuhls durchführen, dabei vorzugsweise das zu desilikonisierende Papier von einer Walze abspulen, um es der Behandlung gemäß erstem Schritt (a) des erfindungsgemäßen Verfahrens zu unterziehen, sowie danach von der Reaktionsmischung gemäß zweitem Schritt (b) des erfindungsgemäßen Verfahrens abzutrennen, danach es vorzugsweise durch ein Neutralisier- und ein Spülbad zu ziehen und vorzugsweise nach dem Durchlaufen einer Trockenzone an der anderen Seite des Walzenstuhls das so gewonnene, desilikonisierte Papier wieder aufzurollen.

Die vorliegende Erfindung kann, wie zuvor bereits beschrieben, im Rahmen einer bevorzugten Ausführungsform den optionalen Einsatz mindestens einer wasserfreien anorganischen Säure vorsehen. Im Falle der tatsächlichen Verwendung von mindestens einer wasserfreien anorganischen Säure bemisst man deren gesamte Zugabemenge vorzugsweise so, dass stöchiometrische Äquivalenz bezogen auf das insgesamt eingesetzte Alkoholat erzielt wird.

Die vorliegende Erfindung kann, wie zuvor bereits beschrieben, im Rahmen einer bevorzugten Ausführungsform den optionalen Einsatz mindestens einer wasserfreien organischen Säure vorsehen. Im Falle der tatsächlichen Verwendung von mindestens einer wasserfreien organischen Säure kann man vorzugsweise einen deutlichen stöchiometrischen Überschuss an Säure bezogen auf insgesamt eingesetztes Alkoholat wählen. Dieser wird vorzugsweise bis zum 50%igen stöchiometrischen Überschuss bemessen.

Die Einsatzmenge der im Rahmen einer bevorzugten Ausführungsform optional einsetzbaren wasserfreien organischen Säure wird daher vorzugsweise also so gewählt, dass sie von der stöchiometrischen Äquivalenz bis zum 50%igen stöchiometrischen Überschuss reicht, jeweils bezogen auf insgesamt eingesetztes Alkoholat.

Die Einsatzmenge der im Rahmen einer bevorzugten Ausführungsform optional einsetzbaren, mit Wasser verdünnten Brönstedsäuren wird vorzugsweise so gewählt, dass sie von der stöchiometrischen Äquivalenz bis zum 50%igen stöchiometrischen Überschuss reicht, jeweils bezogen auf insgesamt eingesetztes Alkoholat.

Für die im Rahmen einer bevorzugten Ausführungsform bestehende Möglichkeit, dass es sich bei dem zu behandelnden Papier um Papierbahnen handelt, ist es für den Fachmann verständlich, dass es lediglich weniger, orientierender Vorversuche bedarf, um die für die Neutralisation der aus dem erfindungsgemäßen zweiten Schritt (b) hervorgehenden Papierbahnen benötigte Gesamtmenge an verdünnter Brönstedsäure in bevorzugter Weise festzulegen. Da solche Papierbahnen, die im Rahmen einer solchen bevorzugten Ausführungsform aus der Reaktionsmischung abgetrennt werden, lediglich mit einer alkoholischen Alkoholatlösung benetzt sind, ist deren, zur Alkoholat-Neutralisaton benötigte Gesamtmenge an mit Wasser verdünnter Brönstedsäure, naturgemäß kleiner als die Gesamtmenge, die man für die Neutralisation der Alkoholatmenge benötigt, die gemäß einer anderen Ausführungsform der Erfindung bei der Neutralisation des Alkoholats in Mischung mit dem desilikonisierten Papier, vorzugsweise zerkleinertem Papier, benötigt wird.

Insbesondere dann, wenn die aus einem optionalem Neutralisationsschritt absehbare Salzmenge einer leichten Filtration im Wege steht, so ist vorzugsweise der Einsatz von mindestens einem Solvens vorzusehen.

Als optionale Solventien, die in einem optionalem Neutralisationsschritt vorzugsweise einsetzbar wären, eignen sich bevorzugt solche, die selbst mit Blick auf das Reaktionssystem chemisch inert sind und die Verdünnung bzw. Dispersion der Bestandteile der optionalen Neutralisation fördern. Bevorzugt ist das mindestens eine optionale Solvens ausgewählt aus der Gruppe bestehend aus Alkanen, Alkylaromaten und Alkoholen, besonders bevorzugt ausgewählt aus der Gruppe der Alkylaromaten, insbesondere ausgewählt aus der Gruppe bestehend aus Toluol und Xylole.

Im Rahmen der Erfindung können grundsätzlich alle Silikone recycelt werden, die für die Beschichtung von Papieren in Frage kommen.

Gemäß einer bevorzugten Ausführungsform der Erfindung erfolgt das Verfahren unter Zufuhr von Wärme und/oder, bevorzugt, und unter Eintrag mechanischer Energie.

Es ist bevorzugt, wenn die Behandlung des silikonisierten Papiers im Rahmen des erfindungsgemäßen Verfahrens, vorzugsweise zwischen 50°C und 200°C, bevorzugt zwischen 80°C und 180°C, insbesondere zwischen 80°C und 120°C vorgenommen wird.

Gemäß einer weiteren besonders bevorzugten Ausführungsform der Erfindung erfolgt der erste Schritt (a) des erfindungsgemäßen Verfahrens unter Eintrag mechanischer Energie, wobei die mechanische Energie auf die übliche dem Fachmann bekannte Weise eingebracht werden kann, vorzugweise in Form von Rührenergie oder Ultraschall.

Im Produktionsmaßstab können vorzugsweise Rührreaktoren (Rührkessel) zum Einsatz kommen, die in der chemischen Verfahrenstechnik gebräuchlich sind.

Vorzugsweise sind zum Eintrag mechanischer Energie ebenfalls alle Vorrichtungen geeignet, die es z.B. erlauben, die zu desilikonisierenden Papierbahnen insbesondere in Form von Papierrollen translatorisch durch eine aus mindestens einem Alkohol und mindestens einem Alkalimetallalkoholat bestehende Mischung unter Wärmeeintrag zu bewegen, so dass zum Beispiel auch Kalander erfolgreich eingesetzt werden können.

Das erfindungsgemäße Verfahren kann vorzugsweise bei Normaldruck (1013,25 hPa), Unterdruck oder aber auch unter Überdruck, z.B. zur Realisierung hoher Wärmebehandlungstemperaturen bis 200°C in druckfesten Apparaturen, vorgenommen werden.

Bevorzugt wird das erfindungsgemäße Verfahren bei Normaldruck durchgeführt, was einer besonders bevorzugten Ausführungsform der Erfindung entspricht.

Gemäß einer anderen bevorzugten Ausführungsform der Erfindung kann die Behandlung des mindestens einen silikonisierten Papiers in dem ersten Schritt (a) bei einem Druck größer 1013,25 hPa durchgeführt wird.

Falls gewünscht, können die aus dem erfindungsgemäßen Prozess gewinnbaren, vorzugsweise mit reaktiven Alkoxyfunktionen versehenen Silane und/oder Siloxane z.B. als polymerisationsaktive Massen ggf. noch in Abmischung mit weiteren vernetzenden Silanen und/ oder Siloxanen, mit Füllstoffen gefüllt und/ oder ungefüllt wieder als Kleb - und Dichtstoffe eingesetzt werden.

Für den Fachmann verständlich prägt die jeweilige Art und chemische Zusammensetzung des eingesetzten Beschichtungssilikons die Zusammensetzung der nach dem erfindungsgemäßen Verfahren vorzugsweise erhaltenen Alkoxygruppen enthaltenden Siloxane.

Im Sinne der vorliegenden Erfindung umfasst der Begriff des Alkoxygruppen enthaltenden Siloxans insbesondere auch solche Stofflichkeiten, die wechselnde Mengen Alkoxygruppen aufweisender Silane bzw. Siloxane, wie z.B. Alkoxytrimethylsilan, Dialkoxydimethylsilan, Dialkoxytetramethyldisiloxan, etc.) enthalten.

Das Abtrennen des de-silikonisierten Papiers von der flüssigen Phase kann nach den üblichen Methoden erfolgen, z.B. durch Filtration.

Werden im Rahmen einer bevorzugten Ausführungsform der Erfindung beispielsweise zu desilikonisierende Papierbahnen unter Durchlaufen eines Kalanders behandelt, so lässt sich hierbei eine bevorzugte Abtrennung der flüssigen Phase von der Papierbahn im Sinne eines Ab- und Auspressens vorzugsweise bereits durch die Festlegung des Walzenspaltes erreichen, der vorzugsweise unmittelbar hinter einem zu passierenden, aus mindestens einem Alkohol und mindestens einem Alkalimetallalkoholat bestehendem, Behandlungsbad angeordnet ist. Solches Vorgehen entspricht einer bevorzugten Ausführungsform der Erfindung.

Nachfolgend werden noch weitere bevorzugte Ausführungsformen des erfindungsgemäßen Verfahrens näher erläutert und/oder beispielhaft veranschaulicht.

Bringt man im Rahmen einer rein beispielhaften bevorzugten Ausführungsform des erfindungsgemäßen Verfahrens beispielsweise ein gelbliches, stückiges einseitig silikonisiertes Trennpapier mit einem Auftragsgewicht von z.B. 1,5 g strahlenhärtendem Silikon /m² Papierträger unter Rühren in eine Matrix z.B. bestehend aus Ethanol und Kaliummethylat ein und erwärmt z.B. für 4 Stunden auf leichten Rückfluss, neutralisiert z.B. mit einer wässrigen Essigsäurelösung, filtriert die festen Bestandteile z.B. mit einem Faltenfilter ab und wäscht mit mehreren Portionen vollentsalzten Wassers säure- und salzfrei und trocknet z.B. durch Kontaktieren mit Ethanol, so kann man einen weißen, papiernen Träger gewinnen (siehe erfindungsgemäßes Beispiel 1), der vollkommen von Silikon befreit ist, eine exzellente Saugfähigkeit gegenüber Wasser aufweist und zu allen Produkten weiterverarbeitet werden kann, die in der Papierindustrie aus zellulosischen Recyclingmaterialien gewonnen werden.

Der erfindungsgemäße De-Silikonisier-Effekt, das heißt die Ablösung der Silikonschicht vom papiernen Träger, lässt sich im Rahmen einer weiteren bevorzugten Ausführungsform der Erfindung vorzugsweise durch die infrarotspektroskopische Analyse der Papieroberfläche belegen, denn die für die Präsenz von Silikonen charakteristischen Bandenlagen bei Wellenzahlen zwischen 1020 cm-1 und 1099 cm-1 sind beim erfindungsgemäß de-silikonisierten Papier ganz erheblich kleiner als die entsprechenden Banden für das silikonisierte Papier und außerdem zeigt das erfindungsgemäß de-silikonisierte Papier vorzugsweise die für das an zellulosische OH-Gruppen gebundene Wasser charakteristischen Bandenlagen zwischen 3150 bis ca. 3750 Wellenzahlen, während das silikonisierte Papier dort nur eine vergleichsweise schwache Absorption aufweist.

In einer weiteren bevorzugten Ausführungsform der Erfindung kontaktiert man das Aufschlußsystem aus mindestens einem Alkohol und mindestens einem Alkalimetallalkoholat nicht nur einmal, sondern vorzugsweise mehrfach mit den zu desilikonisierenden Flächengebilden und kann auf diese Weise die Konzentration des Alkoxygruppen enthaltenden Siloxans im Aufschlußsystem steuern. Durch Einsatz analytischer Methoden wie zum Beispiel der ²⁹Si-NMR-Spektroskopie, aber auch zum Beispiel mit Hilfe von Viskositätsmessungen lässt sich dann das Alkoxygruppen enthaltende Siloxan charakterisieren.

Die erfindungsgemäß erzielbare chemische Ablösung der Silikonbeschichtung von einem silikonisierten Papier lässt sich vorzugsweise dadurch noch weiter fördern, dass man im Rahmen einer besonders bevorzugten Ausführungsform der Erfindung bei der Wärmebehandlung vorzugsweise dafür sorgt, dass die wiederzuverwertenden Papiere im Sinne einer Translation durch das Aufschlußsystem aus mindestens einem Alkohol und mindestens einem Alkalimetallalkoholat bewegt werden.

Dieser Lehre folgend, kann z.B. im Rahmen einer weiteren besonders bevorzugten Ausführungsform der Erfindung bei gerollten Papieren vorzugsweise auch eine walzenstuhlartige Anordnung zur Ausführung der Erfindung genutzt werden, indem man z.B. das zu einer Rolle gewickelte, zu desilikonisierende Papier auf einen Walzenstuhl spannt, abwickelt und das abgewickelten Papier durch ein Tauchbad aus mindestens einem Alkohol und mindestens einem Alkalimetallalkoholat zieht, und temperierbar ist. Dem Fachmann einleuchtend bestimmen in solcher bevorzugter Ausführungsform dann die Abrollgeschwindigkeit, die Länge des Tauchbades und hiervon abgeleitet die effektive Kontaktzeit des Trägersystems mit dem Aufschlußsystem aus mindestens einem Alkohol und mindestens einem Alkalimetallalkoholat neben der Temperatur und weiteren Parametern die Wirksamkeit des De-Silikonisiervorgangs. Falls gewünscht, können in solcher bevorzugter Ausführungsform z.B. nach Passage des Aufschlußsystems das Papier vorzugsweise noch durch ein Spülbad gezogen, danach gegebenenfalls getrocknet und an anderer Stelle des Walzenstuhls wieder aufgerollt werden.

Wie weiter oben bereits erwähnt, können mit dem erfindungsgemäßen Verfahren vorzugsweise auch Alkoxsiloxane bereitgestellt werden. Die erfindungsgemäß erhältlichen Alkoxysiloxane kann man vorzugsweise als Ausgangsmaterialien für polymerisationsaktive Massen und dann bevorzugt unter Zusatz geeigneter Vernetzungskatalysatoren, ggf. noch in Abmischung mit weiteren vernetzenden Silanen und/ oder Siloxanen, ggf. mit Füllstoffen und/ oder Pigmenten gefüllt und/ oder ungefüllt als Kleb - und/oder Dichtstoffe einsetzen.

Darüber hinaus eignen sich die erfindungsgemäß erhältlichen Alkoxysiloxane zum Beispiel auch als Ausgangsmaterialien für die Herstellung von SiOC-verknüpften Polyethersiloxanen durch Umesterung mit Polyetherolen in Gegenwart von Zinkacetylacetonat als Katalysator, wie es in der Europäischen Patentschrift EP3438158 (B1) dargelegt wird.

Falls vor der hier beschriebenen optionalen Weiterverarbeitung zum Beispiel besondere zahlenmittlere Siloxankettenlängen gewünscht sind, können die erfindungsgemäß erhältlichen Alkoxysiloxane vorzugsweise noch einer nachgeschalteten, bevorzugt sauer-katalysierten Äquilibrierung unterworfen werden, um die Zielkettenlängen einzustellen.

Gleichfalls ist es vorzugsweise möglich, die erfindungsgemäß erhältlichen Alkoxysiloxane beispielsweise durch die Umsetzung in einem Reaktionsmedium, umfassend Essigsäureanhydrid, Perfluoralkansulfonsäure (insbesondere Trifluormethansulfonsaure) sowie vorzugsweise Essigsäure, unter Auskreisen des jeweiligen Essigsäureesters z.B. in die entsprechenden Acetoxygruppen aufweisenden Siloxane, wie in der Patentanmeldung EP 3663346 A1 beschrieben, zu überführen und diese gleichfalls als reaktive Intermediate, wie beispielsweise zur Herstellung von SiOC-verknüpften Polyethersiloxanen oder auch als Ausgangsmaterialien für polymerisationsaktive Massen einzusetzen.

Das folgende Beispiel dient allein zur weiteren Erläuterung der vorliegenden Erfindung und stellt keinerlei Beschränkung der vorliegenden Erfindung dar.

### Beispiel:

Die Infrarotspektroskopie wurde als Mittel zur Charakterisierung der Trägeroberflächen eingesetzt. Die Messungen wurden an einem IR-Spektrometer Tensor 27 der Firma Bruker Optik GmbH, ausgestattet mit einer ATR-Einheit MIRacle, Multiple Crystals CRY der Firma PIKE versehen mit einem ATR-Kristall (Ge-Performance Crystal Plate) unter Nutzung der OPUS 7.2 Auswerte-Software vorgenommen.

### Beispiel 1 (erfindungsgemäß)

### Desilikonisierung eines silikonisierten Trennpapiers

In einem 500-ml-Vierhalsrundkolben, ausgerüstet mit einem KPG-Glasflügelrührer, Innenthermometer und aufgesetztem Rückflußkühler wurden 100 g Ethanol zusammen mit 5,0 g Kaliummethanolat unter Rühren vorgelegt. Dann wurden 10,6 g eines in Stücke von ca. 1 bis 2 cm Länge und ca. 1 cm Breite zerschnittenen, silikonisierten Trennpapiers hinzugefügt und die Mischung wurde für 4 Stunden auf Rückflusstemperatur (ca. 80°C) erhitzt.

Man ließ die Reaktionsmischung auf 23°C abkühlen und fügte unter Rühren 100 ml einer 25 Gew.-% Essigsäure hinzu und beließ den Ansatz für 30 Minuten. Man trennte über einen Faltenfilter (MN 615) die desilikonisierten Papierschnipsel ab, spülte diese mit 4 Portionen von 100 ml vollentsalzten Wassers sowie zum Abschluss noch mit 50 ml Ethanol nach.

Die so isolierten, weißen Papierschnipsel wurden über Nacht bei 23°C getrocknet.

Mit Hilfe der Infrarotspektroskopie wurden die Oberflächen sowohl des silikonisierten als auch des desilikonisierten Papieres charakterisiert.

Die im Infrarotspektrum für die Präsenz von Silikonen charakteristischen Bandenlagen bei Wellenzahlen zwischen 1020 cm⁻¹ und 1099 cm⁻¹ waren beim erfindungsgemäß de-silikonisierten Papier ganz erheblich kleiner als die entsprechenden Banden für das silikonisierte Trennpapier. Außerdem zeigte das erfindungsgemäß de-silikonisierte Trennpapier die für das an zellulosische OH-Gruppen gebundene Wasser charakteristischen Bandenlagen zwischen 3150 bis ca. 3750 Wellenzahlen, während das silikonisierte Trennpapier dort nur eine vergleichsweise schwache Absorption aufwies.

Das desilikonisierte Papier nahm auf seiner Oberfläche applizierte Wassertropfen spontan und löschblattähnlich auf, während das silikonisierte Papier Wassertropfen ohne irgendeine Benetzung abstieß.

## Patentansprüche

1. Verfahren zur stofflichen Wiederverwertung silikonisierter Papiere, umfassend zumindest die folgenden Schritte:
| | |
|---|---|
| erster Schritt (a): | Behandlung mindestens eines silikonisierten Papiers unter Kontaktierung mit mindestens einem Alkohol und mindestens einem Alkalimetallalkoholat unter Wärmeeintrag, und zwar ohne Entfernung von etwaig auftretendem Wasser aus der Reaktionsmischung, |
| und danach, | |
| zweiter Schritt (b): | Abtrennen des aus dem ersten Schritt (a) resultierenden, mindestens einen de-silikonisierten Papiers aus der gegebenenfalls zuvor neutralisierten Reaktionsmischung. |

2. Verfahren gemäß Anspruch 1, **dadurch gekennzeichnet, dass** das abgetrennte, mindestens eine de-silikonisierte Papier mit mindestens einer Brönstedsäure behandelt wird, vorzugsweise mit Hilfe von mindestens einer nicht-oxidierenden Brönstedsäure, besonders bevorzugt mit mindestens einer mit Wasser verdünnten Brönstedsäure, wobei die Konzentration der mindestens einen mit Wasser verdünnten Brönstedsäure vorzugsweise zwischen 10 und 50 Gew.-%, bevorzugt zwischen 15 und 40 Gewichtsprozent liegt, wobei verdünnte Schwefelsäure (vorzugsweise 10 bis 25 Gew.-% in Wasser), verdünnte Perchlorsäure (vorzugsweise 10 bis 25 Gew.-% in Wasser) und/oder verdünnte Essigsäure (vorzugsweise 10 bis 30 Gew.-% in Wasser) ganz besonders bevorzugt sind.

3. Verfahren gemäß Anspruch 1 oder 2, **dadurch gekennzeichnet, dass** die vom mindestens einen de-silikonisierten Papier abgetrennte Reaktionsmischung mit Hilfe von mindestens einer wasserfreien Brönstedsäure neutralisiert wird, vorzugsweise ausgewählt aus der Gruppe bestehend aus wasserfreien anorganischen Säuren und wasserfreien organischen Säuren, insbesondere ausgewählt aus der Gruppe bestehend aus wasserfreier Schwefelsäure, wasserfreier Perchlorsäure und wasserfreier Essigsäure.

4. Verfahren gemäß Anspruch 1, **dadurch gekennzeichnet, dass** die aus dem ersten Schritt (a) resultierende Reaktionsmischung vor dem Abtrennen des mindestens einen de-silikonisierten Papiers mit Hilfe von mindestens einer Brönstedsäure neutralisiert wird, vorzugsweise mit Hilfe von mindestens einer nicht-oxidierenden Brönstedsäure, besonders bevorzugt mit Hilfe von mindestens einer mit Wasser verdünnten Brönstedsäure, wobei die Konzentration der mindestens einen mit Wasser verdünnten Brönstedsäure vorzugsweise zwischen 10 und 50 Gew.-%, bevorzugt zwischen 15 und 40 Gewichtsprozent liegt, wobei verdünnte Schwefelsäure (vorzugsweise 10 bis 25 Gew.-% in Wasser), verdünnte Perchlorsäure (vorzugsweise 10 bis 25 Gew.-% in Wasser) und/oder verdünnte Essigsäure (vorzugsweise 10 bis 30 Gew.-% in Wasser) ganz besonders bevorzugt sind.

5. Verfahren nach einem der Ansprüche 1 bis 4, **dadurch gekennzeichnet, dass** das aus dem zweiten Schritt (b) erhaltene, mindestens eine de-silikonisierte Papier, vorzugsweise mit Hilfe von mindestens einer Brönstedsäure behandelte de-silikonisierte Papier, gewaschen wird, vorzugsweise mit vollentsalztem Wasser.

6. Verfahren nach einem der Ansprüche 1 bis 5, **dadurch gekennzeichnet, dass** das mindestens eine de-silikonisierte Papier, vorzugsweise mit Hilfe von mindestens einer Brönstedsäure behandelte und insbesondere gewaschene de-silikonisierte Papier, getrocknet wird, vorzugsweise thermisch und/oder gegebenenfalls durch Kontaktierung mit mindestens einem organischen Lösungsmittel.

7. Verfahren gemäß einem der Ansprüche 1 bis 6, **dadurch gekennzeichnet, dass** der erste Schritt (a) unter Eintrag mechanischer Energie erfolgt, wobei die mechanische Energie vorzugweise in Form von Rührenergie oder Ultraschall eingebracht wird.

8. Verfahren gemäß einem der Ansprüche 1 bis 7, **dadurch gekennzeichnet, dass** der erste Schritt (a) unter Wärmeeintrag in einem Temperaturbereich zwischen 50°C und 200°C, bevorzugt zwischen 80°C und 180°C, insbesondere zwischen 80°C und 120°C erfolgt.

9. Verfahren gemäß einem der Ansprüche 1 bis 8, **dadurch gekennzeichnet, dass** die Behandlung in dem ersten Schritt (a) ohne die Verwendung wasserbindender Kieselsäureester, insbesondere ohne Einsatz von Tetraalkoxysilanen, vorgenommen wird.

10. Verfahren nach einem der Ansprüche 1 bis 9, **dadurch gekennzeichnet, dass** das im ersten Schritt (a) eingesetzte, mindestens eine Alkalimetallalkoholat der allgemeinen Formel [M⁺ ] [OR⁻ ] entspricht, wobei
M ausgewählt ist aus der Gruppe bestehend aus Li, Na und K, bevorzugt ausgewählt aus der Gruppe bestehend aus Na und K,
R einen linearen, verzweigten oder zyklischen Alkylrest darstellt, bevorzugt mit 1 bis 10 Kohlenstoffatomen, weiter bevorzugt mit 1 bis 6 Kohlenstoffatomen, besonders bevorzugt mit 1 oder 2 Kohlenstoffatomen,
vorzugsweise werden Kaliumethanolat, Natriumethanolat, Kaliummethanolat und/oder Natrium-methanolat, insbesondere Kaliummethanolat, eingesetzt.

11. Verfahren nach einem der Ansprüche 1 bis 10, **dadurch gekennzeichnet, dass** der im ersten Schritt (a) eingesetzte mindestens eine Alkohol ausgewählt ist aus der Gruppe bestehend aus lineare, verzweigte und zyklische C1 bis C10-Alkanole, wobei vorzugsweise Methanol, Ethanol, 1- Propanol, Isopropanol, 1-Butanol, 2-Butanol, iso-Butanol, Pentanole, Hexanole, Heptanole, Octanole, Nonanole und/oder Dekanole, und/oder deren Isomere, eingesetzt werden, besonders bevorzugt werden Methanol und/oder Ethanol, insbesondere Ethanol, eingesetzt.

12. Verfahren nach einem der Ansprüche 1 bis 11, **dadurch gekennzeichnet, dass** der im ersten Schritt (a) eingesetzte mindestens eine Alkohol in einer Gesamt-Menge von 10 bis 200 Massen-%, bevorzugt 20 bis 100 Massen-%, besonders bevorzugt 30 bis 80 Massen-% bezogen auf die Masse des bei der Umsetzung insgesamt verwendeten Silikons, welches der Masse des gesamten Silikons, mit welchem das mindestens eine silikonisierte Papier beschichtet ist, entspricht, eingesetzt wird.

13. Verfahren nach einem der Ansprüche 1 bis 12, **dadurch gekennzeichnet, dass** das im ersten Schritt (a) eingesetzte mindestens eine Alkalimetallalkoholat in einer Gesamt-Menge von 1 bis 10 Massen-%, bevorzugt von 2 bis 7 Massen-%, besonders bevorzugt von 3 bis 6 Massen-% bezogen auf die Masse des bei der Umsetzung insgesamt verwendeten Silikons, welches der Masse des gesamten Silikons, mit welchem das mindestens eine silikonisierte Papier beschichtet ist, entspricht, eingesetzt wird.

14. Verfahren nach einem der Ansprüche 1 bis 13, **dadurch gekennzeichnet, dass** die Behandlung in dem ersten Schritt (a) über einen Zeitraum von 1 bis 12 Stunden, bevorzugt über einen Zeitraum von 2 bis 8 Stunden durchgeführt wird.
